# EUROPÄISCHE PATENTSCHRIFT

(11) **EP 3 919 262 B1**
(45) Veröffentlichungstag und Bekanntmachung des Hinweises auf die Patenterteilung: **07.05.2025**
(21) Anmeldenummer: 20178064.0
(22) Anmeldetag: 03.06.2020
(51) Int. Cl.: B29C 69/00, F28D 1/04, F28F 1/02, F28F 21/06, B29C 49/42, B29C 65/08, B29C 65/48, B29C 65/00, B29L 23/00, B29L 31/00, B29L 31/18, F28D 21/00

(54) **VERFAHREN ZUR HERSTELLUNG EINER ROHRANORDNUNG FÜR DEN TRANSPORT VON TEMPERIERMEDIUM**
METHOD FOR PRODUCING A PIPE ASSEMBLY FOR THE TRANSPORT OF TEMPERATURE CONTROL MEDIUM
PROCÉDÉ DE FABRICATION D'UN AGENCEMENT TUBULAIRE POUR LE TRANSPORT D'UN MILIEU DE MISE EN TEMPÉRATURE

(43) Veröffentlichungstag der Anmeldung: 08.12.2021
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE)
(74) Vertreter: Novagraaf Group

(56) Entgegenhaltungen:
- EP-A2- 0 337 802
- DE-A1- 10 231 866
- DE-A1- 102017 118 134
- JP-A- H0 524 101
- US-A1- 2015 017 502
- US-B1- 6 660 198

## Beschreibung

Die Erfindung betrifft ein Verfahren zur Herstellung einer Rohranordnung für den Transport von Temperiermedium sowie einen Temperierkreislauf.

Temperiermedien werden in der Elektromobilität benötigt. Akkumulatoren von Elektrofahrzeugen, insbesondere Lithium-Ionen-Akkumulatoren, weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welchen Temperiermedien zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren, insbesondere zu kühlen. Hierzu gehören neben dem Akkumulator die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum autonomen Fahren ausgerüstet, werden leistungsfähige Sensoren und leistungsfähige Rechner benötigt, wobei die Systeme redundant vorhanden sind. Dadurch, dass der Bauraum beschränkt ist, ergibt sich auch bei diesen Systemen ein Bedarf zur Temperierung/Kühlung durch eine Temperiereinrichtung.

Temperiermedien kommen ferner in Klimaanlagen zum Einsatz. Klimaanlagen, insbesondere mobile Klimaanlagen, umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Kraftfahrzeugen, ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyceln.

DE 10 2017 118 134 A1 beschreibt ein Verfahren zum Herstellen eines Rohres für den Transport von Ansaugluft eines Verbrennungsmotors mittels Blasformen.

JP H05 24101 A beschreibt ein Verfahren zur integralen Herstellung einer Rohranordnung, umfassend ein Hauptrohr und ein Nebenrohr.

DE 102 31 866 A1 beschreibt ein Verfahren zur Herstellung eines Kuntstoffhohlkörpers, bei welchem ein Vorformling zu zwei flächigen Halbzeugen aufgeschnitten wird, aus welchen anschließend Halbschalen geformt und zu einem Hohlkörper verbunden werden.

Der Erfindung liegt die Aufgabe zugrunde, eine Rohranordnung für den Transport von Temperiermedium bereitzustellen, welche einfach und kostengünstig herstellbar ist.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung einer Rohranordnung für den Transport von Temperiermedium werden zunächst Grundkörperabschnitte bereitgestellt, welche kongruent ausgestaltete Trennflächen aufweisen, wobei anschließend an zumindest einem Grundkörperabschnitt zumindest ein Funktionselement derart angeordnet wird, dass dieses mit dem Temperiermedium in Kontakt stehen kann, danach werden die Grundkörperabschnitte entlang der Trennfläche gefügt und stoffschlüssig miteinander zur Bildung der Rohranordnung verbunden.

Rohranordnungen von Temperierkreisläufen enthalten mehrere für die Funktionsfähigkeit der Temperierkreislaufs erforderliche Funktionselemente. Dies sind beispielsweise Drosselventile, Rückschlagventile, schaltbare Ventile, Pumpen, Durchflusssensoren, Verbindungselemente, Konnektoren und Temperatursensoren. Bei der erfindungsgemäßen Rohranordnung ist zumindest eines der Funktionselemente in dem Grundkörper, also innerhalb der Rohranordnung, angeordnet, so dass dieses mit dem Temperiermedium in Kontakt steht.

Erfindungsgemäß erfolgt die Herstellung der Grundkörperabschnitte, indem ein aus polymerem Material bestehender Vorformling bereitgestellt wird, wobei der Vorformling in einer Blasform angeordnet wird und der Vorformling mittels Blasformen in die Gestalt eines Grundkörpers gebracht wird und der geformte Grundkörper anschließend geöffnet wird, so dass die Grundkörperabschnitte mit der Trennfläche entstehen. Dabei wird der Grundkörper entlang der Trennfläche aufgerissen oder aufgeschnitten. Hierbei ist vorteilhaft, dass die Grundkörperabschnitte schnell und kostengünstig hergestellt werden können. Des Weiteren ergibt sich entlang der Trennfläche eine hervorragende Passform der Grundkörperabschnitte.

Die Rohranordnung besteht aus einem mittels Blasformen hergestellten Grundkörper aus polymerem Material. Durch das Blasformen ist es möglich, einen Grundkörper mit einer komplexen Gestalt herzustellen. Beispielsweise kann der Grundkörper einen oder mehrere Kanäle umfassen, welche in der für den Montageort erforderlichen Gestalt geformt, beispielsweise gekrümmt, sein können. Des Weiteren ist es besonders einfach, Querschnittsänderungen in die Kanäle einzuformen. Beispielsweise können Abschnitte der Kanäle kreisförmig sein, wohingegen andere Abschnitte der Kanäle nicht rund, beispielsweise oval oder rechteckig, ausgebildet sind. Dadurch kann die Rohranordnung besonders platzsparend ausgebildet und an den Montageort angepasst sein. Dadurch, dass zunächst der Grundkörper geformt, dieser anschließend aufgeschnitten, dann mit Funktionselementen bestückt und wieder gefügt wird, ist es möglich, komplexe Funktionselemente in dem Grundkörper anzuordnen. Des Weiteren können Funktionselemente im Inneren des Grundkörpers angeordnet werden, die nicht geeignet sind, einem Blasformprozess ausgesetzt zu werden, beispielsweise weil die Funktionselemente nicht ausreichend temperatur- oder druckstabil sind.

Dabei sind die Funktionselemente separat von dem Grundkörper ausgebildet. Daher können die Funktionselemente insbesondere Komponenten aus nichtthermoplastischem Material aufweisen und/oder aktiv steuerbar sein. Derartige Funktionselemente sind beispielsweise Drosselventile aus metallischem Material, schaltbare Ventile, Rückschlagventile mit metallischem Federkörper, Sensoren, beispielsweise Temperatursensoren, Drucksensoren oder Durchflusssensoren, Pumpen, Verbindungselemente oder Konnektoren zum Verbinden der Rohranordnung mit Aggregaten oder dergleichen. Das Funktionselement kann auch als Kühler ausgebildet sein und die Temperatur des Temperiermediums beeinflussen.

Dabei sind die separat ausgebildeten Funktionselemente innerhalb des Grundkörpers angeordnet. Der Grundkörper wiederum besteht aus einem mittels Blasformen hergestellten Grundkörper aus polymerem Werkstoff, welcher materialeinheitlich und einstückig ausgebildet ist. Nach dem Verschließen der Grundkörperabschnitte sind die Funktionselemente ortsfest in dem Grundkörper angeordnet. Dadurch ist die Herstellung einer funktionalen Rohranordnung mit komplexer Geometrie mit einfachen Verfahrensschritten möglich.

Zumindest ein weiteres Funktionselement kann aus dem Grundkörper ausgeformt sein. Dazu kann die Blasform derart ausgebildet sein, dass während des Blasformens in den Grundkörper das weitere Funktionselement eingeformt wird. Dies ist insbesondere dann denkbar, wenn das Funktionselement ein passives Funktionselement ist und keinerlei bewegliche Teile aufweist. Beispielsweise kann das Funktionselement ein Drosselventil bilden. Ein Drosselventil, beziehungsweise Expansionsventil, bewirkt durch eine lokale Verengung des Strömungsquerschnitts eine Verminderung des Drucks des durchfließenden Temperiermediums und bewirkt gleichzeitig eine Expansion des Temperiermediums. Das Drosselventil ist dabei als ungeregeltes Drosselventil ausgebildet und bildet eine Einschnürung des Kanals. Dadurch, dass das Drosselventil direkt aus dem Grundkörper ausgeformt ist, ist die Rohranordnung besonders kostengünstig und einfach herstellbar. Das Funktionselement kann auch als Fluidverteilungselement ausgebildet sein. Ferner ist denkbar, dass das Funktionselement als Verbindungselement oder Konnektor ausgebildet ist. Dadurch kann die Rohranordnung ausgerüstet sein, mit weiteren Komponenten eines Temperierkreislaufs verbunden zu werden.

In den Grundkörper wird zumindest ein Kanal eingeformt, wobei das zumindest eine Funktionselement in dem Kanal angeordnet wird. Dadurch steht das Funktionselement in unmittelbarem Kontakt mit dem Temperiermedium und kann entweder direkt den Volumenstrom des Temperiermediums beeinflussen oder direkt Zustandsdaten des Temperiermediums, wie Temperatur, Volumenstrom oder Druck, erfassen.

Erfindungsgemäß werden in den Grundkörper mehrere Kanäle eingeformt, wobei zwischen den Kanälen eine Kanalwand geformt wird. Dadurch kann der Grundkörper verschiedene Rohrabschnitte eines Klimakreislaufs aufnehmen, beispielsweise den Kanalabschnitt vor und hinter einem Verdampfer. Durch die Kanalwand sind beide Volumenströme voneinander getrennt.

In einer erfindungsgemäßen Verwendung bildet die Rohranordnung einen Teil eines Temperierkreislaufs.

Gemäß einer ersten Ausgestaltung ist die Rohranordnung Teil eines Klimakreislaufs einer Klimaanlage. Dabei kann die Klimaanlage insbesondere als mobile Klimaanlage ausgebildet sein. Die mobile Klimaanlage wiederum kann Bestandteil eines Kraftfahrzeugs sein, wobei die Klimaanlage der Klimatisierung des Fahrzeuginnenraums dient. Dadurch, dass der Grundkörper der Rohranordnung zwar eine komplexe Geometrie aufweisen und mehrere Funktionselemente beinhalten kann, ist die Rohranordnung dennoch einfach zu montieren und weist nur wenige Teile auf. Insofern vereinfacht die erfindungsgemäße Rohranordnung die Komplexität insbesondere einer mobilen Klimaanlage eines Kraftfahrzeugs. Dies ist insbesondere in Bezug auf elektrisch angetriebene Kraftfahrzeuge vorteilhaft, da diese aufgrund des für den Elektroantrieb erforderlichen Akkumulators nur über einen sehr beschränkten Bauraum verfügen. Das Blasformverfahren ermöglicht es, dass die Rohranordnung an den zur Verfügung stehenden Bauraum angepasst ist, wobei die Kanäle für den Transport von Temperiermedium so bemessen sind, dass ein optimaler Transport von Temperiermedium möglich ist.

Gemäß einer zweiten Ausgestaltung ist die Rohranordnung Teil eines Temperierkreislaufs der Antriebseinheit eines Elektrofahrzeugs. Dabei führt die Rohranordnung den zu temperierenden Elementen der Antriebseinheit Temperiermedium zu, so dass die Elemente innerhalb eines gewünschten Temperaturspektrums temperiert werden können. Beispielsweise können die Akkumulatoren je nach Anforderung erwärmt oder gekühlt werden. Des Weiteren können die Elektromotoren sowie Komponenten der Leistungselektronik und auch Steckverbindungen mittels Temperiermedium gekühlt werden. Die Kühlung von Steckverbindungen ist dabei insbesondere bei Schnellladevorgängen vorteilhaft, da beim Schnellladen aufgrund der hohen Ladeströme starke Erwärmungen an Steckverbindungen auftreten können. Dadurch, dass die Rohranordnung im Blasformen geformt ist, kann die Rohranordnung in einer großen Formenvielfalt hergestellt werden. Dies ist insbesondere im Hinblick auf den für eine Rohranordnung beschränkten und komplex geformten Bauraum der zuvor genannten Komponenten vorteilhaft.

Gemäß einer dritten Ausgestaltung ist die Rohranordnung Teil einer Temperiereinrichtung, welche eingerichtet ist, Komponenten der Fahrzeugelektronik zu temperieren, insbesondere zu kühlen. Komponenten der Fahrzeugelektronik sind dabei beispielsweise Sensoren und Rechner für das autonome Fahren sowie Bordcomputer.

Einige Ausgestaltungen der erfindungsgemäßen Rohranordnung werden nachfolgenden anhand der Figuren näher erläutert. Diese zeigen, jeweils schematisch:
- Fig. 1: eine Rohranordnung mit einem in den Grundkörper eingeformten Drosselventil;
- Fig. 2: eine Rohranordnung mit mehreren separat ausgebildeten Funktionselementen;
- Fig. 3: eine weitere Rohranordnung mit mehreren separat ausgebildeten Funktionselementen.

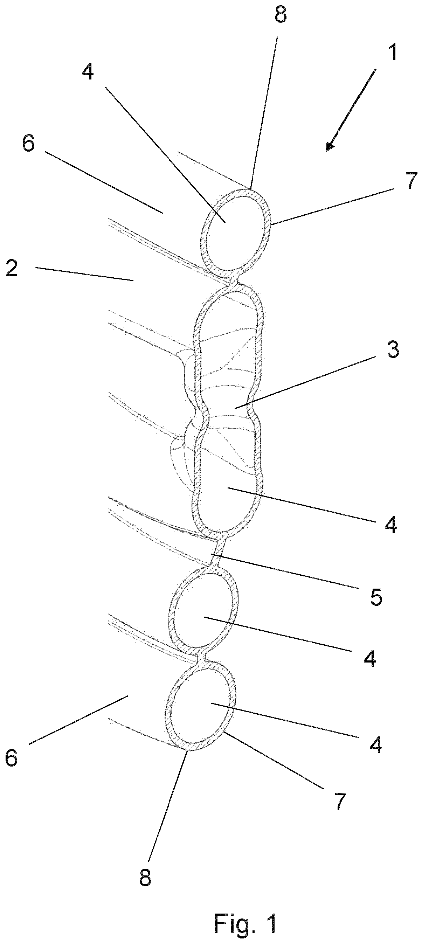

Figur 1 zeigt eine Rohranordnung 1 für den Transport von Temperiermedium,
umfassend einen mittels Blasformen hergestellten Grundkörper 2 aus polymerem Werkstoff. In dem Grundkörper 2 ist zumindest ein Funktionselement 3 angeordnet, welches mit dem Temperiermedium in Kontakt steht. Das Funktionselement 3 ist in einem Kanal 4 angeordnet, wobei das Funktionselement 3 einstückig aus dem Grundkörper 2 ausgeformt ist. Das Funktionselement 3 bildet ein Drosselventil und ist durch eine Querschnittsverengung des Kanals 4 ausgebildet.

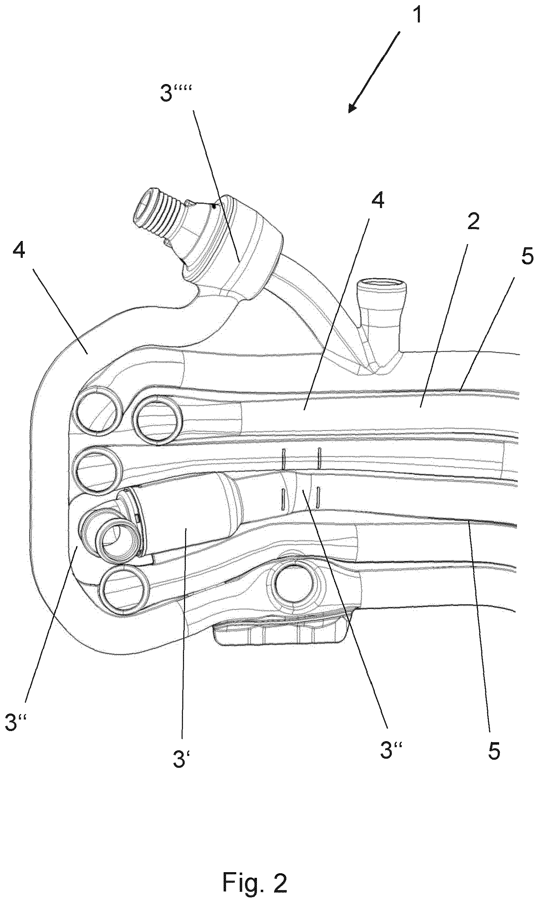

Figur 2 zeigt eine Rohranordnung 1 gemäß Figur 1, wobei der Grundkörper 2 mehrere Funktionselemente 3 umfasst, welche separat von dem Grundkörper 2 ausgebildet und im Inneren des Grundkörpers 2 angeordnet sind. Der Grundkörper 2 weist mehrere Kanäle 4 auf, wobei sich zwischen den Kanälen 4 jeweils eine Kanalwand 5 befindet.

Die Rohranordnung 1 umfasst mehrere Funktionselemente 3, unter anderem ein Rückschlagventil 3', einen Temperatursensor, einen Drucksensor, einen Durchflusssensor sowie einen Konnektor in Form eines Anschlussblocks 3" zum Anschluss der Rohranordnung 1 an angrenzende Aggregate oder Rohrleitungen. Des Weiteren weist die Rohranordnung 1 ein direkt in einen Kanal 4 eingeformtes Drosselventil 3‴ auf, welches materialeinheitlich und einstückig aus dem Grundkörper 2 ausgeformt ist.

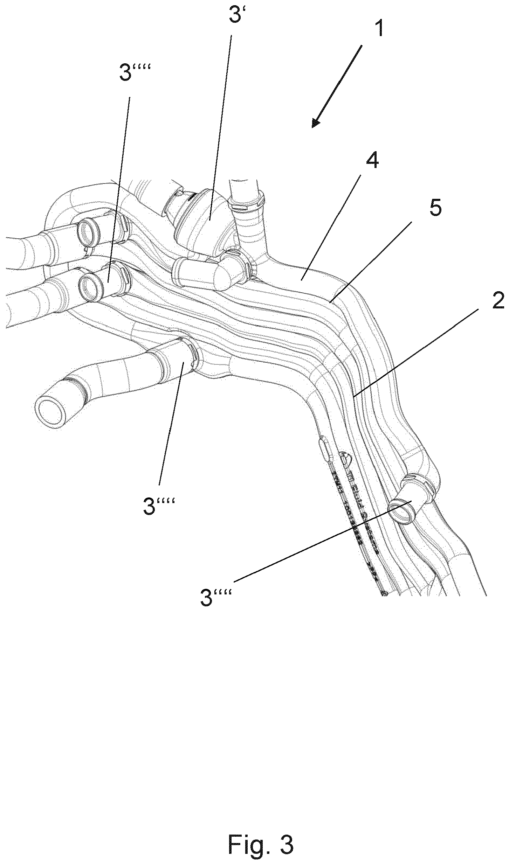

Figur 3 zeigt eine alternative Ausgestaltung der in Figur 2 gezeigten Rohranordnung 1. In die Rohranordnung 1 sind mehrere Funktionselemente 3 in Form eines Rückschlagventils 3' und mehrerer Konnektoren 3ʺʺ eingebracht.

Die in den Figuren 1 bis 3 gezeigten Rohranordnungen 1 bilden einen Bestandteil eines Klimakreislaufs einer Klimaanlage, wobei die Klimaanlage als mobile Klimaanlage eines Kraftfahrzeugs ausgebildet ist. Gemäß einer weiteren Ausgestaltung bilden die Rohranordnungen 1 einen Bestandteil eines Temperierkreislaufs der Antriebseinheit eines Elektrofahrzeugs, wobei die Rohranordnungen 1 Temperiermedium den Zellen der Akkumulatoren sowie den elektrischen Steuerungskomponenten und Steckverbindungen zuführen.

In einer weiteren Ausgestaltung ist die Rohranordnung 1 Bestandteil einer Temperiereinrichtung, welche eingerichtet ist, Komponenten der Antriebseinheit von Elektrofahrzeugen zu temperieren. Hierzu gehören neben dem Akkumulator die Leistungselektronik und die Elektromotoren. Des Weiteren ist die Temperiereinrichtung eingerichtet, die Ladeelektronik und die dazugehörigen Steckverbindungen und Leitungen zu kühlen, was insbesondere im Zusammenhang mit Schnellladevorgängen vorteilhaft ist.

Ferner kann die Temperiereinrichtung eingerichtet sein, Komponenten der übrigen Fahrzeugelektronik zu temperieren, insbesondere zu kühlen. Derartige Komponenten sind beispielsweise Sensoren und Rechner für das autonome Fahren sowie Bordcomputer.

Bei dem erfindungsgemäßen Verfahren zur Herstellung einer Rohranordnung 1 für den Transport von Temperiermedium gemäß einer der Figuren 1 bis 3 wird zunächst ein aus polymerem Material bestehender Vorformling bereitgestellt, wobei der Vorformling in einer Blasform angeordnet wird und der Vorformling mittels Blasformen in die Gestalt eines Grundkörpers 2 gebracht wird. Anschließend wird der geformte Grundkörper 2 geöffnet, so dass Grundkörperabschnitte 6, 7 mit einer Trennfläche 8 entstehen. Hierzu wird der Grundkörper 2 entlang der Trennfläche 8 aufgerissen. An zumindest einem Grundkörperabschnitt 6, 7 wird zumindest ein Funktionselement 3 derart angeordnet, dass dieses mit dem Temperiermedium in Kontakt stehen kann. Danach werden die Grundkörperabschnitte 6, 7 entlang der Trennfläche 8 gefügt und stoffschlüssig miteinander zur Bildung der Rohranordnung 1 verbunden. Die stoffschlüssige Verbindung kann durch Erwärmen der Grundkörperabschnitte 6, 7 entlang der Trennfläche, durch Ultraschallschweißen der Grundkörperabschnitte 6, 7 oder mittels eines Klebemittels erfolgen.

## Patentansprüche

1. Verfahren zur Herstellung einer Rohranordnung (1) für den Transport von Temperiermedium, bei welchem Grundkörperabschnitte (6, 7) bereitgestellt werden, welche kongruent ausgestaltete Trennflächen (8) aufweisen, wobei ein aus polymerem Material bestehender Vorformling bereitgestellt wird, wobei der Vorformling in einer Blasform angeordnet wird und der Vorformling mittels Blasformen in die Gestalt eines Grundkörpers (2) gebracht wird, wobei in den Grundkörper (2) mehrere Kanäle (4) eingeformt werden, wobei sich zwischen den Kanälen (4) eine Kanalwand (5) befindet, wobei der geformte Grundkörper (2) geöffnet wird, so dass die Grundkörperabschnitte (6, 7) mit der Trennfläche (8) entstehen, wobei der Grundkörper (2) zum Herstellen der Grundkörperabschnitte (6, 7) entlang der Trennfläche (8) aufgerissen oder aufgeschnitten wird, wobei an zumindest einem Grundkörperabschnitt (6, 7) zumindest ein Funktionselement (3) derart angeordnet wird, dass dieses mit dem Temperiermedium in Kontakt stehen kann, wobei das zumindest eine Funktionselement (3) in einem Kanal (4) angeordnet wird, danach werden die Grundkörperabschnitte (6, 7) entlang der Trennfläche (8) gefügt und stoffschlüssig miteinander zur Bildung der Rohranordnung (1) verbunden.

2. Verfahren nach Anspruch 1, **dadurch gekennzeichnet, dass** die Blasform derart ausgebildet ist, dass während des Blasformens in den Grundkörper (2) zumindest ein weiteres Funktionselement (3') eingeformt wird.

3. Verfahren nach Anspruch 2, **dadurch gekennzeichnet, dass** das aus dem Grundkörper (2) ausgeformte weitere Funktionselement (3') ein Drosselventil, Verbindungselement oder Konnektor bildet.

4. Verfahren nach einem der Ansprüche 1 bis 3, **dadurch gekennzeichnet, dass** das zumindest eine Funktionselement (3) als Ventil, Drosselventil, Rückschlagventil, Sensor, Pumpe, Verbindungselement oder Konnektor ausgebildet ist.

5. Temperierkreislauf, umfassend eine Rohranordnung (1), erhältlich nach einem der vorherigen Ansprüche.

## Claims

1. Method for producing a pipe arrangement (1) for the transport of temperature control medium, in which main-body portions (6, 7) are provided which have congruently designed separating surfaces (8), wherein a preform consisting of polymeric material is provided, wherein the preform is arranged in a blow mold and the preform is blow-molded into the shape of a main body (2), wherein a plurality of channels (4) are molded into the main body (2), wherein a channel wall (5) is located between the channels (4), wherein the molded main body (2) is opened, so that the main-body portions (6, 7) with the separating surface (8) are created, wherein the main body (2) is torn open or cut open along the separating surface (8) in order to produce the main-body portions (6, 7), wherein at least one functional element (3) is arranged on at least one main-body portion (6, 7) in such a way that it can be in contact with the temperature control medium, wherein the at least one functional element (3) is arranged in a channel (4), then the main-body portions (6, 7) are joined along the separating surface (8) and materially connected to one another to form the pipe arrangement (1).

2. Method according to claim 1, **characterized in that** the blow mold is designed such that at least one further functional element (3') is molded into the main body (2) during blow molding.

3. Method according to claim 2, **characterized in that** the further functional element (3') molded from the main body (2) forms a throttle valve, connecting element or connector.

4. Method according to any of claims 1 to 3, **characterized in that** the at least one functional element (3) is designed as a valve, throttle valve, check valve, sensor, pump, connecting element or connector.

5. Temperature control circuit comprising a pipe arrangement (1) obtainable according to any of the preceding claims.

## Revendications

1. Procédé pour la fabrication d'un agencement de tubes (1) pour le transport d'un fluide de régulation de température, dans lequel des sections de corps de base (6, 7) sont fournies, lesquelles présentent des surfaces de séparation (8) de forme congruente, dans lequel une préforme constituée d'un matériau polymère est fournie, dans lequel la préforme est disposée dans un moule de soufflage et la préforme est amenée dans la forme d'un corps de base (2) par moulage par soufflage, dans lequel plusieurs canaux (4) sont moulés dans le corps de base (2), dans lequel une paroi pour canaux (5) se trouve entre les canaux (4), dans lequel le corps de base (2) moulé est ouvert de sorte que les sections de corps de base (6, 7) sont obtenues avec la surface de séparation (8), dans lequel le corps de base (2) est déchiré ou découpé le long de la surface de séparation (8) pour fabriquer les sections de corps de base (6, 7), dans lequel au moins un élément fonctionnel (3) est disposé sur au moins une section de corps de base (6, 7) de telle sorte que ledit élément fonctionnel peut être en contact avec le fluide de régulation de température, dans lequel l'au moins un élément fonctionnel (3) est disposé dans un canal (4), ensuite, les sections de corps de base (6, 7) sont assemblées le long de la surface de séparation (8) et reliées entre elles par liaison de matière pour former l'agencement de tubes (1).

2. Procédé selon la revendication 1, **caractérisé en ce que** le moule de soufflage est réalisé de telle sorte que, pendant le moulage par soufflage, au moins un autre élément fonctionnel (3') est moulé dans le corps de base (2).

3. Procédé selon la revendication 2, **caractérisé en ce que** l'autre élément fonctionnel (3') formé à partir du corps de base (2) forme une soupape d'étranglement, un élément de liaison ou un connecteur.

4. Procédé selon l'une des revendications 1 à 3, **caractérisé en ce que** l'au moins un élément fonctionnel (3) est réalisé sous la forme d'une soupape, d'une soupape d'étranglement, d'un clapet antiretour, d'un capteur, d'une pompe, d'un élément de liaison ou d'un connecteur.

5. Circuit de régulation de température, comprenant un agencement de tubes (1), pouvant être obtenu selon l'une des revendications précédentes.
